# EUROPEAN PATENT SPECIFICATION

(11) **EP 1 747 823 B1**
(45) Date of publication and mention of the grant of the patent: **28.05.2008**
(21) Application number: 05425540.1
(22) Date of filing: 25.07.2005
(51) Int. Cl.: B09B 3/00

(54) **Condensing method for recycling systems**
Kondensationsverfahren zum verwerten von Systeme
Procédé de condensation pour recycler des systèmes

(43) Date of publication of application: 31.01.2007
(73) Proprietor: MERLONI PROGETTI S.p.A., 20151 Milano (IT)
(72) Inventor: Caron, Remigio, 37050 Angiari (Verona) (IT)
(74) Representative: Long, Giorgio

(56) References cited:
- EP-A- 1 149 862
- EP-A- 1 473 071
- WO-A-02/02209
- GB-A- 2 383 761

## Description

The present invention relates to a cryo-treating method and equipment for recycling systems of various materials, particularly plastic material combined with materials of a different nature, such as the one deriving from the recycling either of household appliances or other composite products.

With the term "composite product" is meant a complex product containing materials of a different nature, such as for example plastic materials of various type, metals or other non-metallic materials such as glass, wood, etc.. With the term "composite material", such as employed in the continuation of the present specification, is meant the mixture of various nature materials which derive from the grinding of said composite products, containing discrete pieces of a single material, as well as pieces consisting of two or more materials.

The scrap material recycling industry has acquired an ever-increasing importance for essentially environmental reasons. In fact, it is advantageous to reduce the amount of material being either conveyed to the waste dump sites, which have to be included within limited surfaces, or the incinerators, which are often subject to criticism due to the polluting potential thereof deriving from the fumes flowing from the system which contain substances harmful to health, if they are not damped.

Beyond the environmental reasons, solid economical reasons inducing to reclaim the highest percentage possible of the scrap materials also exist. In fact, the waste disposal is a high cost for the society.

A different examination is required for the recycle either of household appliances or complex products in general, such as refrigerators, air-conditioners or any other product containing coolants and/or foamed materials, which are impregnated with the used expansion fluid. These coolants have to be removed during the initial step of the recycling operations, because they would cause a pollution of the system and the work environment.

The coolant removal from the cooling coils is relatively simple, because these coolants are drawn in by suitable pumps in the refrigerator disassembling and preparing steps for the grinding, together with the motor oil.

On the other hand, the removal of the espansion gases being absorbed into the foamed plastic material is more problematic. In fact, the casing of the household appliance is headed to an initial grinding stage from which it comes out in the form of a composite material having a relatively homogeneous size. The foamed materials, being lighter than the others, are separated by suction and headed to a briquetting step in order to reduce the volume thereof for the final disposal. Now, both in the grinding and the briquetting step, the foamed material is subject to a compression releasing the gases absorbed thereinto. These gases will have to be necessarily intercepted in order to avoid the release thereof in the environment. To this purpose, the known recycling systems comprise a low-temperature (a temperature lower than -130°C) condensing step of these gases.

A significant problem of these systems occurs when the expansion gas is a hydrocarbon, typically pentane, as it often happens. In fact, it is not excluded that sparks which give rise to bursts, in the presence of hydrocarbon/air mixtures, are produced during the grinding. These bursts can seriously damage the grinding equipment, even if they are of a small size.

Therefore, the problem at the heart of the present invention is to provide a method and equipment for the carrying out thereof which enable a higher processing safety.

This problem is solved by a method and equipment for the carrying out thereof such as defined in the annexed claims.

European patent application EP 1473 071 A1 (D1) descrive a method for purifying exhaust gases including condensation of exhaust gases to separate them from non-condensable gases and absorbing them on an absorber.

European patent application EP 1149 862 A1 (D2) describes a method for recycling the polyurethane foam from dismissed refrigerators.

The cited prior art documents do not disclose or suggest a method for recycling dismissed refrigerators or the like wherein the coolant is recycled in the grinding means according to the method of present claim 1.

Further characteristics and advantages of the present invention will be better understood from the description of an exemplary embodiment, which is given herein below by way of indicative and non-limiting example, with reference to the following figures:
Fig. 1 shows a block diagram of the method of the present invention;
Fig. 2 shows a sectional side view of the condensing means according to the invention;

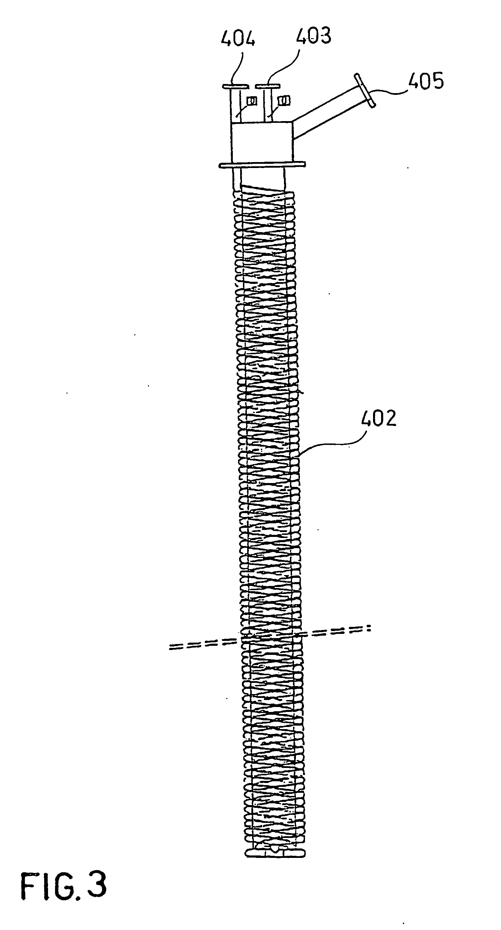

Fig. 3 shows a view according to the same direction from Fig. 2 of the detail of the condensing means coil according to the invention.

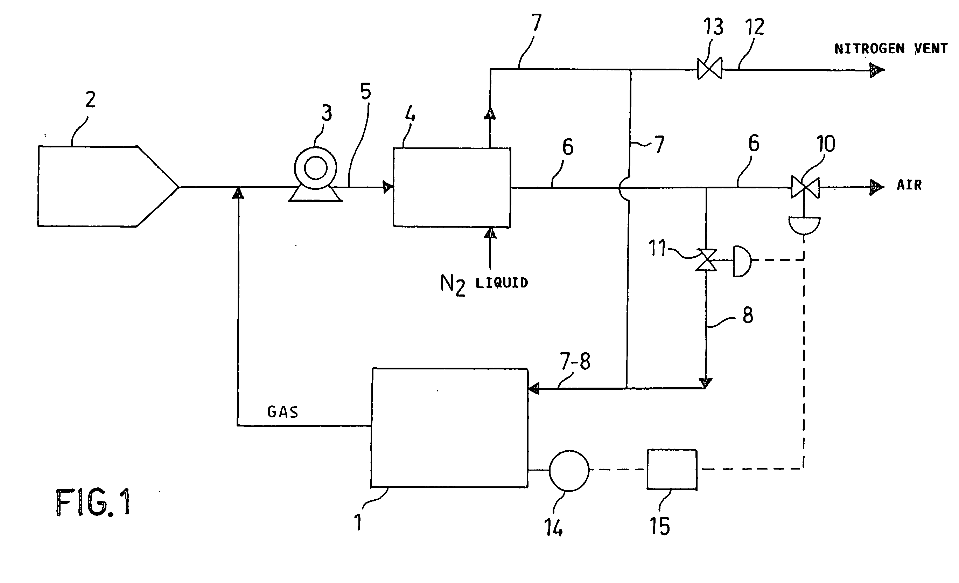

Fig. 1 shows the condensing step of the gases generated during the grinding step of the composite product and the briquetting step of the synthetic foamed material reclaimed during the recycling process, downstream of the initial grinding. These subsequent steps, being completely conventional, are not shown, as they are not a specific object of the present invention. It will be sufficient to add that the synthetic foamed material is reclaimed by suction from the composite material flow produced in the grinding step. This composite material, downstream of the grinding, is normally dispensed on suitable belt conveyers, from which one or more suction ports draw in the foamed material, being lighter than the other materials, and convey the latter to the briquetting machine.

Both the grinding action inside the grinder and the foamed material compaction inside the briquetting machine release considerable amounts of gas from this material, i.e. the expansion gas used for preparing the material. This gas is a condensable polluting gas and is typically either a saturated hydrocarbon, particularly pentane, or a Freon, such as R11 or R12.

In figure 1, the grinding means have been schematically indicated with number 1 and the briquetting means have been indicated with number 2.

The usually employed grinding means 1 are equipments of a known type. The composite product, being preventively separated from parts containing toxicants/pollutants, such as (motor) oil or various nature gases such as the coolant gases (refrigerator or air-conditioner heat exchangers), is introduced into the mill, from which the composite material will flow out in ground form, in the desired size. The size may be changed by acting on the mill speed and grinding time and by placing a netting-screen with holes of the desired size at the mill exhaust opening.

The briquetting means 2 are also of the conventional type and comprise pressing and extrusion means of the briquetted material.

The gas released both from the grinding means 1 and the briquetting means 2 is drawn in by the intake means 3 (typically a fan), together with air, and conveyed to the condensing means 4, by means of a suitable pipeline 5.

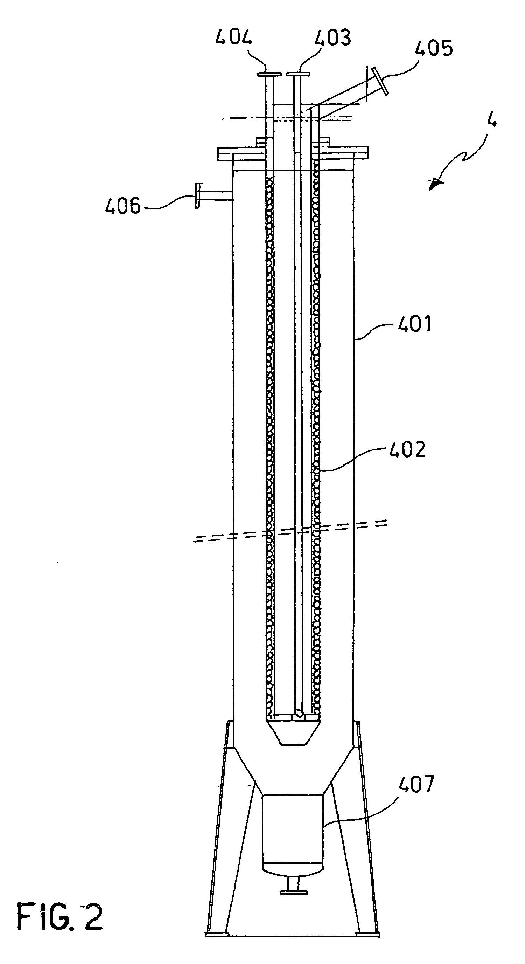

With reference to figure 2, the condensing means 4 comprise a casing 401 inside which a double-coil heat exchanger 402 is placed, provided with inlet and outlet apertures 403, 404. A coolant flows into the double coil 402. This coolant is an inert fluid with a boiling point lower than -130°C. Typically, this inert coolant is liquid nitrogen, therefore reference will be made to this coolant in the continuation of the present description, by way of example and in a non-limiting manner. The condensing means 1 further comprise a loading opening 405 for the condensable air/polluting gas mixture and an exhaust opening 406 for the fresh air. The particular geometry of the heat exchanger and the applied fluid dynamic conditions prevent a layer of solidified components from depositing on the heat exchange surfaces, thus avoiding the loss of efficiency and the risk that the system may be blocked due to a mechanical obstruction. This problem is deeply felt because the gaseous stream also carries high-melting substances such as oils and ammonium salts originating from the contamination of the refrigerator foamed materials with ammonia and lubricants of the cold production circuit.

The polluting gases, being in contact with the coil 402 through which the liquid nitrogen flows, condense and are collected on the collecting bottom 407 of the condensing means, from which they are tapped and sent to the disposal. On the contrary, the fresh air flowing from the condensing means 4 is headed to the vent along the line 6.

On the other hand, the liquid nitrogen, after having absorbed heat, passes into the aeriform state and flows from the condensing means along the line 7. This line 7 recycles the gaseous nitrogen within the grinding means 1.

The recycle line 8 of a portion of fresh air within the grinding means 1 branches from the vent line 6 for the air.

Both the vent line 6, downstream of the branch of the line 8, and the recycle line 8 for the air are intercepted by respective valve means 10, 11 which provide for the adjusting of the gas flow and hence the pressure inside the grinding means 1.

The vent line 12 for the nitrogen, intercepted by the valve means 13, branches from the recycle line 7 for the nitrogen.

In standard operating conditions, the valve means 13 are closed, so that all the nitrogen flowing from the condensing means 4 is recycled in the grinding means 1. The introduction of an inert gas such as the nitrogen causes a substantially inert atmosphere within the grinding means, after the system has worked for few minutes. Thereby, it is avoided that the polluting hydrocarbon gases, optionally exhaled by the foamed material, may cause a burst, even in the presence of possible sparks.

As said, a portion of the fresh air flowing from the condensing means 4 along the lines 6 and 7 is recirculated in the grinding means 1. Preferably, the volume of air recirculated to the grinding means 1 ranges between 10 and 15% of the total volume flowing from the condensing means 4. The air and nitrogen flowing into the grinding means 1 through the lines 7 and 8 are such as to cause a substantially inert atmosphere within these grinding means 1, the amount of oxygen being lower than 5% by volume compared to the total volume of the aeriform substances.

Moreover, the cold and dry air and nitrogen flow lowers the moisture content in the internal atmosphere of the grinding means 1 and consequently in the gas flow entering the condensing means 4. Thereby, the liquid nitrogen consumption is minimized, because the consumption thereof due to the unnecessary steam condensation is reduced. In other words, the same nitrogen, which in the form of liquid nitrogen causes the condensing of the condensable polluting gases inside the condensing means 4, is used in the form of gas together with the recirculating air, in order to reduce the steam concentration in the grinding means 1. A further advantage is that the internal temperature is maintained at a completely safe value, both to the machined product and the system. This temperature is preferably lower than 50°C.

It is important that a slight depression is always present inside the grinding means 1, in order to avoid that the generated gas may escape to the outside with imaginable environmental problems. Therefore, it can be recommended that some pressure sensors should be present within the grinding means 1 and that this internal pressure may be kept under control by means of a suitable pressure indicator 14, such as to stop or at least reduce the entering nitrogen and/or air flow. This effect can be obtained either by partially or totally closing the valve means 11 and opening the valve means 10 and optionally acting on the valve means 13.

It is preferred that this operation is automatically controlled. To this purpose, in one preferred embodiment of the present invention, a control and monitoring unit 15 is connected to said pressure indicator 14 and is operatively connected to the valve means 10, 11 of the vent line 6 and the recycle line 8 for the air, respectively. The control and monitoring unit 15 reads the pressure inside the grinding means 1 by means of the pressure indicator 14 and transmits a suitable closing control of the valve means 11 and/or an opening control of the valve means 10 if this pressure reaches a pre-determined level which is slightly lower than the atmospheric pressure.

From what has been stated above, the advantages of the present invention are immediately understood.

The recycle of the nitrogen/air mixture allows both to avoid the risk of bursts during the grinding and to reduce the liquid nitrogen consumption in the condensing step. The recycle of cold nitrogen and air further allows the grinder internal temperature to be maintained at acceptable values, especially in the case of a 24-hour continuous processing.

The control and monitoring unit allows to work in an extreme safety, thus avoiding that some overpressures which would cause the leakage of a part of the polluting gases may be produced in the grinding means.

It is understood that only some particular embodiments of the method and equipment being the object of the present invention have been described, to which those skilled in the art will be able to carry out all the modifications required for the adjustment thereof to particular applications, without thus departing from the scope of protection of the present claims.

## Claims

1. A method for recycling a composite product such as a refrigerator or the like, comprising a grinding step of said composite product in grinding means (1) for providing a composite material with generation of condensable polluting gases and a condensing step in condensing means (4) of said condensable polluting gases, wherein said condensing step is carried out by an inert coolant, **characterized in that** said inert coolant flowing from said condensing means (4) in the aeriform state is recycled in said grinding means (1).

2. The recycling method according to claim 1, wherein said inert coolant has a boiling point which is lower than -130°C.

3. The recycling method according to claim 2, wherein said inert coolant is liquid nitrogen.

4. The recycling method according to any of the claims 1 to 3, wherein said grinding means (1) are depressurised by suction means (3) putting in flow communication said grinding means (1) with said condensing means (4).

5. The recycling method according to any of the claims 1 to 4, wherein a portion of air flowing from said condensing means (4) is further added in said grinding means (1) after it is subject to the condensing treatment of said condensable polluting gases.

6. The recycling method according to claim 5, wherein said air portion corresponds to 10-15% by volume of the air flowing from said condensing means (4).

7. The recycling method according to claim 5 or 6, wherein said air flowing from said condensing means (4) is distributed between a vent line (6) and a recycle line (8), said vent and recycle (6, 8) lines being intercepted by respective valve means (10, 11).

8. The recycling method according to any of the claims 5 to 7, wherein said grinding means (1) comprise pressure sensors connected to a pressure indicator (14).

9. The recycling method according to any of the claims 4 to 8, wherein a control and monitoring unit (15) is provided, being connected to said pressure indicator (14) and operatively connected to said valve means (10, 11) of the vent line (6) and of the recycle line (8) for the air, respectively, wherein said control and monitoring unit (15) reads the pressure inside the grinding means (1) by means of the pressure indicator (14) and transmits a suitable closing control of the valve means (11) and/or an opening control of the valve means (10) if this pressure reaches a pre-determined level which is slightly lower than the atmospheric pressure.

10. The recycling method according to any of the claims 1 to 9, wherein said condensing means (4) comprise a casing (401) inside which a double-coil heat exchanger (402) is placed, provided with inlet and outlet apertures (403, 404) for said inert coolant, said casing (401) further comprising a loading opening (405) for the condensable air/polluting gas mixture, an exhaust opening (406) for the fresh air and a collecting bottom (407) for said condensed polluting gases.

## Patentansprüche

1. Verfahren für die Wiederverwertung eines Komposit-Erzeugnisses, wie etwa eines Kühlschranks oder dergleichen, enthaltend einen Schritt des Zermahlens des Komposit-Produktes in einer Zermahleinrichtung (1), um ein Kompositmaterial mit der Erzeugung kondensierbarer umweltschädlicher Gase bereitzustellen, und einen Kondensierschritt in einer Kondensiereinrichtung (4) zum Kondensieren der kondensierbaren umweltschädlichen Gase, wobei der Kondensierschritt durch ein inertes Kühlmittel ausgeführt wird, **dadurch gekennzeichnet, dass** das inerte Kühlmittel, das aus der Kondensiereinrichtung (4) im gasförmigen Zustand strömt, in der Zermahleinrichtung (1) wiederverwertet wird.

2. Wiederverwertungsverfahren nach Anspruch 1, bei dem das inerte Kühlmittel einen Siedepunkt hat, der niedriger als -130°C ist.

3. Wiederverwertungsverfahren nach Anspruch 2, bei dem das inerte Kühlmittel flüssiger Stickstoff ist.

4. Wiederverwertungsverfahren nach einem der Ansprüche 1 bis 3, bei dem der Druck in der Zermahleinrichtung (1) durch eine Saugeinrichtung (3) herabgesetzt wird, die die Zermahleinrichtung (1) mit der Kondensiereinrichtung (4) in Strömungsverbindung bringt.

5. Wiederverwertungsverfahren nach einem der Ansprüche 1 bis 4, bei dem ein Teil der Luft, die aus der Kondensiereinrichtung (4) strömt, weiter in der Zermahleinrichtung (1) hinzugefügt wird, nachdem sie der Kondensierbehandlung der kondensierbaren umweltschädlichen Gase unterzogen wurde.

6. Wiederverwertungsverfahren nach Anspruch 5, bei dem der Teil der Luft 10 bis 15 Volumenprozent der Luft entspricht, die aus der Kondensiereinrichtung (4) strömt.

7. Wiederverwertungsverfahren nach Anspruch 5 oder 6, bei dem die Luft, die aus der Kondensiereinrichtung (4) strömt, zwischen einer Entlüftungsleitung (6) und einer Wiederverwertungsleitung (8) verteilt wird, wobei die Entlüftungs- und die Wiederverwertungsleitung (6, 8) jeweils durch Ventileinrichtungen (10, 11) unterbrochen sind.

8. Wiederverwertungsverfahren nach einem der Ansprüche 5 bis 7, bei der die Zermahleinrichtung (1) Drucksensoren beinhaltet, die mit einer Druckanzeigeeinrichtung (14) verbunden sind.

9. Wiederverwertungsverfahren nach einem der Ansprüche 4 bis 8, bei dem eine Steuer- und Überwachungseinheit (15) vorgesehen ist, die mit der Druckanzeigeeinrichtung (14) verbunden ist und wirkungsmäßig mit der Ventileinrichtung (10, 11) der Entlüftungsleitung (6) bzw. der Wiederverwertungsleitung (8) für die Luft verbunden ist, wobei die Steuer- und Überwachungseinheit (15) den Druck in den Zermahleinrichtung (1) mit Hilfe der Druckanzeigeeinrichtung (14) liest und eine geeignete Verschlusssteuerung der Ventileinrichtung (11) und/oder eine Öffnungssteuerung der Ventileinrichtung (10) sendet, sofern dieser Druck einen vorbestimmten Pegel erreicht, der geringfügig niedriger ist, als der atmosphärische Druck.

10. Wiederverwertungsverfahren nach einem der Ansprüche 1 bis 9, bei dem die Kondensiereinrichtung (4) ein Gehäuse (401) umfasst, in dem sich ein Doppelwendel-Wärmetauscher (402) befindet, der mit Einlass- und Auslassöffnungen (403, 404) für das inerte Kühlmittel versehen ist, wobei das Gehäuse (401) weiterhin eine Zuflussöffnung (405) für das Gemisch aus kondensierbarer Luft/umweltschädlichem Gas, eine Auslassöffnung (406) für die frische Luft und einen Sammelboden (407) für die umweltschädlichen Gase enthält.

## Revendications

1. Procédé de recyclage d'un produit composite tel qu'un appareil réfrigérant ou similaires, comprenant une étape de broyage dudit produit composite dans des moyens de broyage (1) pour fournir un matériau composite générant des gaz polluants condensables et une étape de condensation dans des moyens de condensation (4) desdits gaz polluants condensables, dans lequel ladite étape de condensation est effectuée par un réfrigérant inerte, **caractérisé en ce que** ledit réfrigérant inerte s'écoulant desdits moyens de condensation (4) à l'état gazeux est recyclé dans lesdits moyens de broyage (1).

2. Procédé de recyclage selon la revendication 1, dans lequel ledit réfrigérant inerte présente un point d'ébullition inférieur à -130 °C.

3. Procédé de recyclage selon la revendication 2, dans lequel ledit réfrigérant inerte est de l'azote liquide.

4. Procédé de recyclage selon l'une quelconque des revendications 1 à 3, dans lequel lesdits moyens de broyage (1) sont dépressurisés par des moyens d'aspiration (3) mettant en liaison d'écoulement lesdits moyens de broyage (1) avec lesdits moyens de condensation (4).

5. Procédé de recyclage selon l'une quelconque des revendications 1 à 4, dans lequel une partie de l'air sortant desdits moyens de condensation (4) est en outre ajoutée dans lesdits moyens de broyage (1) après qu'elle soit soumise au traitement de condensation desdits gaz polluants condensables.

6. Procédé de recyclage selon la revendication 5, dans lequel ladite partie d'air correspond à 10-15 % du volume de l'air sortant desdits moyens de condensation (4).

7. Procédé de recyclage selon la revendication 5 ou 6, dans lequel ledit air sortant desdits moyens de condensation (4) est distribué entre une conduite de sortie d'air (6) et une conduite de recyclage (8), lesdites conduites de sortie d'air et de recyclage (6, 8) étant interceptées par des moyens de soupape (10, 11) respectifs.

8. Procédé de recyclage selon l'une quelconque des revendications 5 à 7, dans lequel lesdits moyens de broyage (1) comprennent des capteurs de pression reliés à un indicateur de pression (14).

9. Procédé de recyclage selon l'une quelconque des revendications 4 à 8, dans lequel une unité de commande et de surveillance (15) est prévue, laquelle est reliée au dit indicateur de pression (14) et reliée opérationnellement aux dits moyens de soupape (10, 11) de la conduite de sortie d'air (6) et de la conduite de recyclage (8) pour l'air, respectivement, dans lequel ladite unité de commande et de surveillance (15) lit la pression à l'intérieur des moyens de broyage (1) grâce à l'indicateur de pression (14) et transmet une commande de fermeture adaptée des moyens de soupape (11) et/ou une commande d'ouverture des moyens de soupape (10) si la pression atteint un niveau prédéterminé, légèrement inférieur à la pression atmosphérique.

10. Procédé de recyclage selon l'une quelconque des revendications 1 à 9, dans lequel lesdits moyens de condensation (4) comprennent un boîtier (401) à l'intérieur duquel est placé un échangeur de chaleur (402) à double bobine, équipé d'ouvertures d'entrée et de sortie (403, 404) pour ledit réfrigérant inerte, ledit boîtier (401) comprenant en outre une ouverture de chargement (405) pour le mélange air condensable/gaz polluant, une ouverture d'évacuation (406) pour l'air frais et un fond collecteur (407) pour lesdits gaz polluants condensés.
